# EUROPEAN PATENT SPECIFICATION

(11) **EP 3 974 255 B1**
(45) Date of publication and mention of the grant of the patent: **29.07.2026**
(21) Application number: 21199183.1
(22) Date of filing: 27.09.2021
(51) Int. Cl.: B60R 3/00, E06C 5/00, B60R 3/02

(54) **VEHICLE**
FAHRZEUG
VÉHICULE

(30) Priority: 25.09.2020 IT 202000022732
(43) Date of publication of application: 30.03.2022
(73) Proprietor: Gema S.r.l., 50013 Campi Bisenzio (FI) (IT)
(72) Inventor: CAMELLINI, Giancarlo, Firenze Campi Bisenzio (IT); LULLI, Alessandro, Firenze Campi Bisenzio (IT)
(74) Representative: Manzella & Associati

(56) References cited:
- JP-A- 2017 087 833
- JP-A- H09 202 186
- US-A- 5 941 342
- US-B1- 6 460 915

## Description

### Technical Field

The present invention relates to a vehicle, in particular a commercial vehicle for transporting products, comprising a support device.

### Background of the invention

The need to facilitate getting on and off vehicles through the use of a support device including a tread has been known for some time.

In particular, in the sector of the transport of products, the vehicles used for this function, of the type of vans, comprise a driver's cab and a loading compartment for the products to be transported, which has an opening on at least one wall to allow loading and unloading of the products contained in the compartment. Vehicles are generally equipped with a footboard mounted at the opening, externally to the vehicle, to ensure that the operator in charge can easily get on and off the vehicle.

An example of a vehicle comprising a support device is illustrated in patent application JP2017087833. The vehicle comprises a device consisting of a ladder, which is associated with the external frame of the vehicle, at a rear part. The ladder is mounted at an opening, made on the back of the vehicle, which is closed by a sliding door. The ladder is movable between a configuration in which it extends towards the ground, for getting on the vehicle, and a configuration in which it is approached to the door, outside the vehicle. Similarly, vehicles intended for the transport of people can be equipped with a running board that facilitates the entry and exit of the occupants from the vehicle or that facilitates access to the vehicle's roof. In particular, this running board is often associated with vehicles equipped to allow occupants to stay inside them, such as, for example, caravans or campers.

An example of a support device associated with a vehicle is illustrated in patent application EP 3 459 791. The support device comprises a frame, which shapes a support plane which extends, at least for a part, on a horizontal plane, at a height lower than the vehicle floor. The frame is arranged externally to the vehicle's body and is connected to the vehicle by means of a pair of connecting elements.

Patent DE 3029392 illustrates a further example of a support device for vehicles. The support device includes a horizontal body that forms a step and a pair of brackets, connected to the opposite ends of the step, for removably attaching the step to the corresponding uprights of the vehicle. The step is mounted externally to the vehicle body, at an access door inside the vehicle, and is positioned at a height between the vehicle floor and the ground.

US patent 10,081,302 and US patent application 2005/0258616 disclose further examples of vehicles comprising a support device. Patent documents JP H09202186A, US 6,460,915 B1 and US 5, 941 342 A disclose further embodiments of vehicles comprising a support device. The document US 6,460,915 B1 discloses a vehicle according to the preamble of claim 1.

A problem complained of in the sector is that the support device is subject to atmospheric agents as it is connected externally to the vehicle body, therefore, it is necessary to carry out frequent cleaning and/or maintenance to preserve its integrity.

A further problem complained of concerns the assembly of the support device, which is complex and lengthy, considering that it is usually necessary to modify the bodywork of the vehicle or further parts of the vehicle. Furthermore, it must be considered that some types of vehicles may have obstructions that hinder or prevent the assembly of the support device, for example electric vehicles that have batteries under the floor. The need is therefore felt to devise a vehicle equipped with a support device that solves the problems described above.

### Disclosure

The aim of the present invention is that of solving the problems described above, devising a vehicle, in particular a commercial vehicle for transporting products, which allows the easy use of a support device for getting on and off the vehicle.

A further object of the present invention is to provide a vehicle that allows one to comfortably carry out the operations of stepping on and off the vehicle.

Another object of the invention is to provide a support device which is durable.

A further object of the present invention is to provide a support device which can be easily mounted on a vehicle.

A further object of the invention is to provide a support device having simple constructive and functional conception, reliable operation, versatile use, as well as relatively inexpensive cost.

Said purposes are achieved, according to the present invention, by the vehicle of claim 1.

The vehicle includes a driver's cab and a load compartment, suitable for containing products. The vehicle also comprises a support device, which enables an operator to get on and off, said support device comprising at least a tread portion and support means, associated with said tread portion.

Said support device is movable, upon actuation of said support means, between a first inactive configuration, in which said tread portion lies on a longitudinal plane, inside said load compartment, and a second operative configuration, in which said tread portion lies on a substantially horizontal plane, outside said load compartment. It is noted that the support device is convenient to use as it is sufficient to operate the support means to bring it into a configuration suitable for use, that is, with the tread portion extending on a horizontal plane, substantially parallel to the ground.

Preferably, said tread portion lies, in said first configuration, on a substantially vertical plane.

A prerogative of the present invention is that the support device is housed inside the load compartment when it is in the first inactive configuration. In this way it is not necessary to make changes to the vehicle bodywork but the space region defined internally by the load compartment is used.

Furthermore, a significant advantage achieved by the vehicle is that the support device is more durable considering that, in the inactive configuration, it is arranged inside the vehicle, protected from atmospheric agents. Consequently, it is not necessary to frequently carry out cleaning and/or maintenance.

Advantageously, said support device is arranged, in said first configuration, in a region of said load compartment above said floor of said load compartment. This feature allows an easy assembly of the support device inside the vehicle, simply by accessing the load compartment, and also allows quick use as it is easily accessible for an operator. It should also be considered that it is a particularly advantageous solution for electric vehicles, which have the batteries generally below the floor of the vehicle.

Preferably, said support device extends, in said first configuration, starting from said floor of said load compartment, in the region overlying said floor.

Preferably the vehicle is a commercial vehicle for transporting products.

Preferably, said vehicle comprises a partition wall suitable for separating said driver's cabin from said load compartment.

Preferably, said support means is associated with an internal part of said vehicle.

Preferably, said support means is associated with said floor of said load compartment of the vehicle.

Alternatively, said support means is associated with said partition wall.

Alternatively, said support means is associated with the inside of the vehicle, on a wall or on an upright which is inside the vehicle, for example at holes made on this wall or upright.

Preferably, said support means is associated with the inside of the vehicle by means of attachment.

Preferably said attachment means is fixed to an internal part of the vehicle. **In** particular, said attachment means is preferably associated with said vehicle floor.

Alternatively, said attachment means is associated with said partition wall.

Preferably said attachment means comprises at least one pair of plate members.

Preferably, said support means comprises at least one pair of support members.

Preferably said support members are connected to the respective ends of said tread portion.

Preferably, said support means is rotating around an axis of rotation.

Preferably said axis of rotation is substantially horizontal.

Preferably, said support means is connected in revolving manner to said floor of said load compartment.

Preferably, said support device comprises an actuating member capable of rotating said support members to allow the device to switch from said first inactive configuration to said second operating configuration.

Preferably said actuating member is a lever member.

Preferably said actuating member is a pedal member.

Alternatively, said actuator member is of the electrical type.

Advantageously, each said support member comprises at least a portion which extends along a transverse direction with respect to the plane of lying of said tread portion so as to support said tread portion in said second configuration at a predefined height from the ground. This feature has the technical effect of easily adapting the support device to the type of vehicle it is intended for, as it is possible to change the dimensions of said portion to establish the height at which the tread portion must be placed. Furthermore, an aspect to be highlighted is the fact of establishing the height of the tread portion from the ground, thanks to the provision of support means equipped with a portion that extends along a transverse direction with respect to the plane of the tread portion, makes getting on and off considerably easier.

According to an aspect of the invention, said support means is associated in a removable way to said tread portion. An advantage is the possibility of easily replacing the support means, if it is necessary to change the height at which the tread portion must be positioned.

Preferably at least one of said support members is made of a bracket.

Preferably, said bracket shapes a first portion, which extends along a direction transverse to the plane of lying of said tread portion and is connected, at one end, to said tread portion.

Preferably each said bracket shapes a second portion integral with said first portion.

Preferably, said second portion develops on a plane parallel to the plane of lying of said tread portion.

According to an aspect of the invention, at least one of the support members comprises a series of levers, preferably connected to each other. This configuration of the support member enables the reduction of the overall dimensions.

Preferably said levers are articulated to form a pantograph.

According to an aspect of the invention, said support device comprises a pair of support members, a support member being made by said bracket and a support member comprising a series of levers.

Preferably, said support device comprises return means associated with said support members, said return means being able to exert a force on said support members such that it causes the switchover of said support device from said second configuration to said first configuration.

Preferably said return means comprises elastic means.

According to the invention, said vehicle comprises at least one access opening to said compartment, on a wall of said load compartment.

According to the invention, said vehicle comprises a door capable of being moved to close said at least one opening or to make said load compartment accessible through said opening.

According to the invention, said support device is arranged, in said first configuration, inside said load compartment, near said opening. This feature causes the support device to be readily available to the operator when the door is moved to allow access to the load compartment through the opening.

According to the invention, said vehicle comprises a locking member which is associated with said support means or with said floor, said locking member being operable to lock said support device in said second configuration.

Preferably, said locking member is mounted on said floor of said load compartment.

Even more preferably, said locking member is mounted on said floor, in a position near said support device when it takes said second configuration.

Preferably, said locking member defines a hook-shaped portion arranged to be connected to said support means, in particular to at least one of said support members, in said second configuration of said support device.

Preferably, said support means comprises an opening to which said hook portion of said locking member may be connected. Alternatively, said locking member is connected to said support means.

According to this aspect of the invention, preferably said locking member defines an element that can be connected to said floor in order to maintain said support device in said second configuration.

According to the invention, said door comprises an unlocking element capable of exerting a force on said locking member, when said door is moved to close said opening, so that it enables the actuation of said support device from said second configuration to said first configuration. Therefore, an automatic actuation of the locking member occurs when the door is closed or when an operator closes the door, the release element exerts a force on the locking member, disengaging it from the support means or from the floor and consequently, the support device can pass from the second configuration to the first configuration.

Preferably, said locking member comprises a gripping portion, which may be gripped by an operator or coupled with said release element, to exert a force on the locking member in order to release it from the support means or from the floor.

Preferably, said release element can be coupled to said gripping portion of said locking member.

It is also possible to provide that the release element is capable to exert a force directly on the support means when said door is moved to close said opening, in order to enable the operation of the device from the second configuration to the first configuration.

Preferably, said support means define a coupling element capable of making contact with said release element, to ease the action of said release element on said support means.

Preferably, said release element is associated with a portion of said door, arranged, in use, at the bottom.

Preferably, said release element is made of a bracket.

Preferably, said door is slidable along respective guide means arranged on said vehicle.

Preferably, said guide means form a guide rail.

Preferably, said release element is arranged near said guide means.

Preferably, in said second configuration, said tread portion is arranged at a height equal to approximately half the height between a floor of said vehicle and the ground.

### Description of drawings

The details of the invention will become more evident from the detailed description of a preferred embodiment of the vehicle, in particular of the commercial vehicle for the transport of products, according to the invention, illustrated by way of example in the accompanying drawings, wherein:
Figure 1 is a detail of the vehicle according to the present invention in which a support device is visible in a first configuration;
Figure 2 is a detail of the vehicle in which the support device is visible in a second configuration;
Figures 3a, 4a, 5a and 6a are respectively a perspective view, a front view, a top view and a side view of the support device according to the first configuration;
Figures 3b, 4b, 5b and 6b are respectively a perspective view, a front view, a top view and a side view of the support device object of the invention according to the second configuration;
Figures 7a, 8a, 9a and 10a are respectively a perspective view, a front view, a top view and a side view of a second embodiment of the support device according to a first configuration;
Figures 7b, 8b, 9b and 10b are respectively a perspective view, a front view, a top view and a side view of the second embodiment of the device according to a second configuration.

### Best mode

With particular reference to these figures, the vehicle is indicated as a whole with 10 and the support device with 1, according to the present invention.

The vehicle is preferably a commercial vehicle for transporting products.

The vehicle is preferably a motor vehicle.

The vehicle 10 comprises a driver's cab, not shown in the figures, and a load compartment 11 suitable for containing the products.

The load compartment 11 is delimited by a floor 12 at the bottom, by a roof, opposite to the floor, which is not shown in the figures at the top. The compartment 11 is also delimited by a series of walls substantially orthogonal to the floor and to the roof. The figures show one of the walls 13 that delimit the compartment 11 and the floor 12, as well as a part of the compartment 11.

The term floor 12 refers to both the vehicle floor and the floor provided with a suitable covering. In fact, it is possible that the floor is covered with a layer of a coating material, which guarantees a more flat and less slippery surface, resulting in greater safety for the operator. The coating can be made, for example, of wood material.

The vehicle 10 comprises, on at least one wall 13 of the load compartment 11, at least one access opening 14 which allows the operator to enter the compartment 11.

A door 15 is mounted at the access opening 14 which may be moved by an operator to make the load compartment 11 accessible or to isolate the load compartment 11 from the external environment. The door 15 is provided with a gripping member 16, in a known way, which facilitates the movement of the door 15 by an operator.

The door 15 may slide along guide means 17 which shapes a guide rail which extends at an edge of the floor 12.

The vehicle 10 comprises a support device 1 which is adapted to be used by an operator to get into the load compartment 11 and out of the load compartment 11.

The support device 1 comprises a tread portion 2 associated with support means 3. The tread portion 2 and the support means 3 form a step.

The tread portion 2 defines a substantially flat surface on which the user of the vehicle can step to get into the vehicle or get out of the vehicle.

The tread portion 2 can have a prismatic shape, preferably a parallelepiped one.

It is possible to provide that the device comprises a further tread portion, not shown in the figures, connected to the first tread portion 2, so as to form a stepladder.

The support means 3 is connected to the opposite ends of the tread portion 2.

According to an embodiment, the support means 3 is removably connected to the tread portion 2; in this way it is possible to easily replace the support means 3 if the height at which the tread portion 2 must be positioned with respect to the ground and the floor of the vehicle, as explained further below, must be changed.

The support means 3 is adapted to be associated inside the vehicle 10, preferably with the floor 12 of the vehicle 10. In particular, the support means 3 is associated with the floor 12 of the load compartment 11 of the vehicle 10.

In the case of a vehicle for the transport of goods, such as, for example, a van, this vehicle is generally provided with a partition wall, not visible in the figures, which divides the driver's cab from the load compartment 11 of the products. The support means 3 can be associated with the partition wall.

Alternatively, in the event that the vehicle 10 is provided with one or more holes at the partition wall or an upright present inside the vehicle 10, the support means 3 can be connected to these holes.

The support means 3 comprise at least one pair of support members rotatable about an axis of rotation, preferably substantially horizontal.

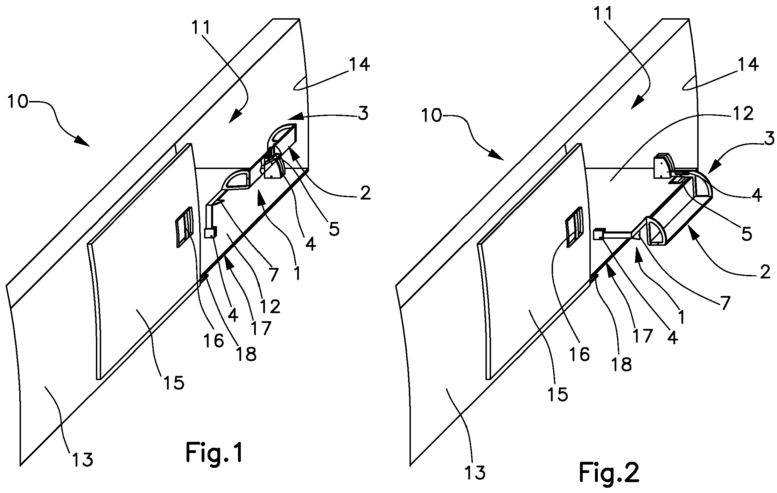

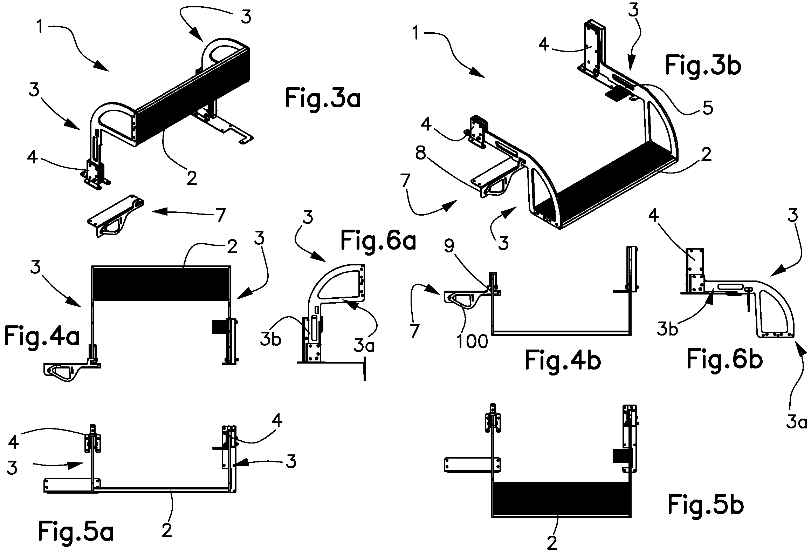

The support device 1 is movable, upon actuation of the support means 3, between a first configuration, in which the tread portion 2 is arranged inside the vehicle 10 and lies on a longitudinal plane, preferably substantially vertical (see Figures 1, 3a, 4a, 5a, 6a, 7a, 8a, 9a, 10a), and a second configuration. In the second configuration, the tread portion 2 is outside the vehicle 10 and lies on a substantially horizontal plane, to offer a comfortable support surface to the user (see Figures 2, 3b, 4b, 5b, 6b, 7b, 8b, 9b, 10b).

More specifically, in the first configuration the tread portion 2 is inside the load compartment 11 of the vehicle 10.

The support device 1 is therefore arranged, in the first configuration, inside the load compartment 11 of the vehicle 10, while, in the second configuration, it is positioned outside the vehicle, passing from the inside to the outside through an opening 14 of the vehicle.

In the first configuration, the support device 1 is arranged in a region of the load compartment 11 above the floor 12 and preferably extends starting from the floor, in the region above the floor 12.

The device preferably extends over a longitudinal plane. Advantageously, the support device 1 can be arranged, in the first configuration, near the opening 14, so as to make the device 1 easily available for the operator (see Figure 1).

The support means 3 is associated inside the vehicle 10 through the attachment means 4 which is fixed to an internal part of the vehicle 10, be it the floor 12 of the load compartment 11, the partition wall or a different part of the vehicle 10.

The attachment means 4 is made up of at least one pair of plate members attached to the vehicle by means of screws or the like. In particular, each support member 3 is associated with a pair of plate members arranged opposite to each other, which anchor it stably to the vehicle.

Each supporting member 3 is coupled to corresponding plate members by the rotatable coupling means, for example a pair of pins.

The support device 1 comprises an actuator member 5, adapted to rotate the support members 3, and, therefore, to enable the device to switch from the first, inactive, configuration to the second operating configuration.

The actuator member 5 is made by a pedal member, associated with one of the support members 3, which is preferably operated by an operator.

The actuator member 5 can be a lever member, for example manually operated.

The actuator member 5 can obviously be of a different type, for example an electric actuator.

Return means, not visible in the figures, is also associated with the support members 3, which exerts a force on the support members 3 such as to cause the switchover of the support device 1 from the second configuration to the first configuration. In particular, the return means exerts a force on the support members 3 which causes the rotation of the support members 3 in a direction opposite to the direction of rotation necessary to switch to the second operating configuration.

The return means comprises elastic means.

The return means can be arranged at the attachment means 4.

Each supporting member 3 comprises at least a portion 3a which extends along a transverse direction with respect to the plane of lying of the tread portion 2 so as to support the tread portion, in the second configuration, at a predefined height from the ground. In this regard, it is noted that it is possible to easily adapt the support device to the type of vehicle for which it is intended by acting, in particular, on the dimensions of this portion of each support member 3, since this portion establishes the height to which the support surface is positioned during use.

Preferably, this portion is sized so that the tread portion 2 is arranged at a height of approximately half the height between the vehicle floor and the ground.

Preferably each support member 3 is made of a bracket.

More in detail, each bracket comprises a first portion 3a which extends on a plane transversal to the plane of the tread portion 2 and is connected, at one end, to the tread portion 2.

Preferably, the first portion 3a lies on a plane orthogonal to the plane of the tread portion 2.

A second portion 3b is integral with the first portion 3a, which extends on a plane parallel to the plane of the tread portion 2, and is constrained, at one end, to the attachment means 4.

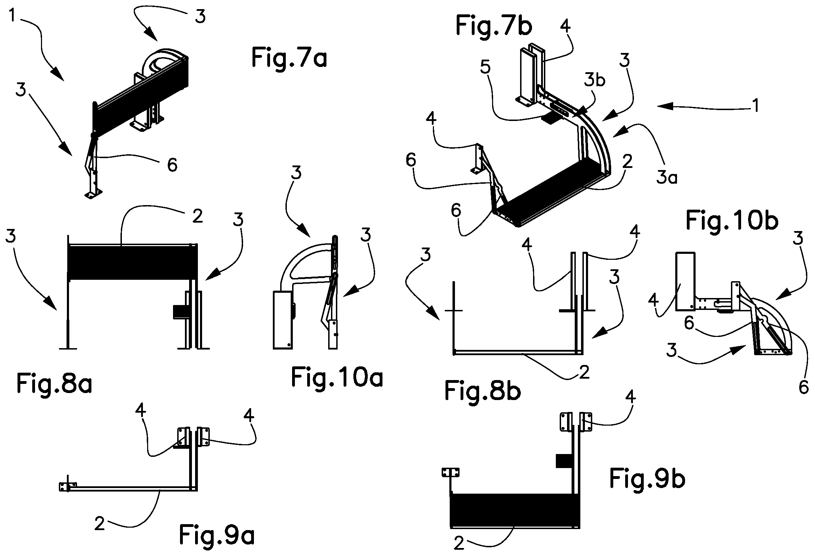

According to a different embodiment, illustrated in Figures 7a, 8a, 9a, 10a, 7b, 8b, 9b, 10b, one of the support members 3 is made up of a series of levers 6 connected, at one end, to the attachment means 4, and, at an opposite end, to the tread portion 2. The levers 6 are articulated to form a pantograph.

This configuration of the support member 3 has the advantage of reducing the overall dimensions, facilitating the assembly of the device inside the vehicle.

The further support member 3 is made of a bracket member which includes the first portion 3a and the second portion 3b described above.

The support device 1 also comprises a locking member 7 which is placed on a surface of the vehicle 10, preferably on the floor 12, in a position such as to be near the support device 1 in the second configuration. The locking member 7 is associated with a sliding surface 8 fixed to the vehicle.

The locking member 7 defines a portion shaped like a hook 9, suitable for engaging one of the support members 3 in the second configuration. In particular, it is possible to provide that an opening for connection with the hook is obtained on a portion of the support member 3.

The locking member 7 is equipped with a gripping portion 100 connected to the hook portion, which can be made by a slot. The gripping portion 100 is adapted to be gripped, for example manually, for exerting a force on the hook portion 9 in order to hook or unhook this hook portion from the support member 3.

The actuation of the locking element 7 can take place automatically, preferably by coupling a door 15 of the vehicle 10 with the gripping portion 100, during the movement of the door 15.

The door 15 is provided with a release element 18 which makes contact with the gripping portion 100, during a closing movement of the door 15, to release the locking member 7 from the support means 3 and thus to enable the support device 1 to switch from the second configuration to the first configuration.

The locking member 7 can alternatively be associated with the support device 1, in particular with the support means 3. In this case, the locking member 7 shapes an element that can be connected to the vehicle floor 12 to lock the support device 1 in the second configuration.

The release element 18 is arranged at the guide means 17.

The release element 18 can be made of a bracket. The operation of the support device is easily understood from the above description.

When it is necessary to use the support device 1, to get inside the vehicle 10 or to get off the vehicle 10, first of all the door 15, which closes the access opening 14, is opened.

Then, the support members 3 are rotated by activating the actuator member 5, so that the support device 1 switches from the first configuration to the second configuration, in which the tread portion 2 extends over a substantially horizontal plane, parallel to the ground.

The locking member 7 is then activated to engage one of the support members 3 or to engage the floor 12.

When the user no longer needs the support device 1, he disengages the locking member 7 from the support member 3 or from the floor 12 and the return means rotates the support members 3 to arrange the device back in the first configuration, inside the compartment 11 of the vehicle 10.

If the door 15 is used to disengage the locking member 7, the operator moves the door 15 to close the compartment 11 and the release element 18 allows the locking member 7 to be automatically disengaged, with the consequent switchover of the support device 1 from the second configuration to the first configuration.

The device described by way of example is subject to numerous modifications and variations according to the different needs, within the scope of the appended claims.

In the practical embodiment of the invention, the used materials, as well as the shape and the dimensions, may be modified depending on needs.

Should the technical features mentioned in any claim be followed by reference signs, such reference signs were included strictly with the aim of enhancing the understanding of the claims and hence they shall not be deemed restrictive in any manner whatsoever on the scope of each element identified for exemplifying purposes by such reference signs.

## Claims

1. A vehicle, in particular commercial vehicle for transporting products, comprising a driver's cab and a load compartment (11), suitable for containing said products, said vehicle comprising a support device (1) comprising at least a portion of tread (2) and support means (3) associated with said tread portion (2), said support device (1) being movable, upon actuation of said support means (3), between a first inactive configuration, in which said portion of tread (2) lies on a longitudinal, preferably substantially vertical, plane inside said load compartment (11), and a second operative configuration in which said portion of tread (2) lies on a substantially horizontal plane, outside said load compartment (11), said vehicle comprising, on a wall (13) of said load compartment (11), at least one opening (14) for entering said load compartment (11), and a door (15 ) adapted to be operated to close said opening (14) or to make said load compartment (11) accessible, said support device (1) being arranged, in said first configuration, inside said load compartment (11), near said opening (14), **characterized in that** it comprises a locking member (7) which is associated with said support means (3) or with said floor (12), said locking member (7) being operable to block said support device (1) in said second configuration and **in that** said door (15) comprises an unlocking element (18) adapted to exert a force on said locking member (7), when said door (15) is moved to close said opening (14), disengaging said locking member (7) from said floor (12) or from said support means (3), to allow the actuation of said support device (1) from said second configuration to said first configuration.

2. The vehicle of claim 1, wherein said support device (1) is arranged, in said first configuration, in a region of said load compartment (11) above a floor (12) of said load compartment (11).

3. The vehicle of claim 2, wherein said support means (3) is associated with said floor (12) of said load compartment (11).

4. The vehicle of claim 1 or 2, wherein it comprises a partition wall arranged between said cab and said load compartment (11), said supporting means (3) being associated with said partition wall.

5. The vehicle of any one of the preceding claims, wherein said support means (3) is rotating about an axis of rotation.

6. The vehicle of any one of the preceding claims, wherein said tread portion (2) is arranged in said second configuration at a height of approximately half the height between a floor (12) of said vehicle and the ground.

7. The vehicle of any one of the preceding claims, wherein said support means (3) comprises at least a portion (3a) which extends along a transverse direction with respect to the lying plane of said tread portion (2) so as to support said tread portion (2), in said second configuration, at a predefined height from the ground.

8. The vehicle of any one of the preceding claims, wherein at least one of said support means (3) is made of a bracket.

9. The vehicle of claim 8, wherein each said bracket shapes a first portion (3a) which extends along a direction transversal to the plane of lying of said tread portion (2) and is connected, at one end, to said portion of tread (2), and a second portion (3b), which develops on a plane parallel to the plane of said tread portion (2), said second portion (3b) being integral with said first portion (3a).

10. The vehicle of any one of the preceding claims, wherein at least one of said support means (3) comprises a series of levers (4).

11. The vehicle of any one of the preceding claims, wherein it comprises return means associated with said support means (3), said return means being adapted to exert a force on said support means (3) such as to cause the switchover of said support device (1) from said second configuration to said first configuration.

12. The vehicle of any one of the preceding claims, wherein said support means (3) is removably associated with said tread portion (2).

## Patentansprüche

1. Fahrzeug, insbesondere Nutzfahrzeug zum Transportieren von Produkten, umfassend eine Fahrerkabine und einen Laderaum (11), der zum Aufnehmen der Produkte geeignet ist, wobei das Fahrzeug eine Stützvorrichtung (1) umfasst, die mindestens einen Trittflächenabschnitt (2) und dem Trittflächenabschnitt (2) zugeordnete Stützmittel (3) umfasst, wobei die Stützvorrichtung (1) bei Betätigung der Stützmittel (3) zwischen einer ersten, inaktiven Konfiguration, in der der Trittflächenabschnitt (2) auf einer längsgerichteten, vorzugsweise im Wesentlichen vertikalen Ebene innerhalb des Laderaums (11) liegt, und einer zweiten, operativen Konfiguration, in der der Trittflächenabschnitt (2) auf einer im Wesentlichen horizontalen Ebene außerhalb des Laderaums (11) liegt, bewegbar ist, wobei das Fahrzeug an einer Wand (13) des Laderaums (11) mindestens eine Öffnung (14) zum Betreten des Laderaums (11) und eine Tür (15) umfasst, die angepasst ist, um zum Schließen der Öffnung (14) oder zum Zugänglichmachen des Laderaums (11) betätigt zu werden, wobei die Stützvorrichtung (1) in der ersten Konfiguration innerhalb des Laderaums (11) in der Nähe der Öffnung (14) angeordnet ist, **dadurch gekennzeichnet, dass** sie ein Verriegelungselement (7) umfasst, das dem Stützmittel (3) oder dem Boden (12) zugeordnet ist, wobei das Verriegelungselement (7) dazu betätigbar ist, die Stützvorrichtung (1) in der zweiten Konfiguration zu arretieren, und dass die Tür (15) ein Entriegelungselement (18) umfasst, das angepasst ist, um eine Kraft auf das Verriegelungselement (7) auszuüben, wenn die Tür (15) zum Schließen der Öffnung (14) bewegt wird, wodurch das Verriegelungselement (7) von dem Boden (12) oder von dem Stützmittel (3) gelöst wird, um die Betätigung der Stützvorrichtung (1) von der zweiten Konfiguration in die erste Konfiguration zu ermöglichen.

2. Fahrzeug nach Anspruch 1, wobei die Stützvorrichtung (1) in der ersten Konfiguration in einem Bereich des Laderaums (11) oberhalb eines Bodens (12) des Laderaums (11) angeordnet ist.

3. Fahrzeug nach Anspruch 2, wobei das Stützmittel (3) dem Boden (12) des Laderaums (11) zugeordnet ist.

4. Fahrzeug nach Anspruch 1 oder 2, wobei es eine zwischen der Fahrerkabine und dem Laderaum (11) angeordnete Trennwand umfasst, wobei das Stützmittel (3) der Trennwand zugeordnet ist.

5. Fahrzeug nach einem der vorstehenden Ansprüche, wobei sich das Stützmittel (3) um eine Drehachse dreht.

6. Fahrzeug nach einem der vorstehenden Ansprüche, wobei der Trittflächenabschnitt (2) in der zweiten Konfiguration in einer Höhe angeordnet ist, die etwa der Hälfte der Höhe zwischen einem Boden (12) des Fahrzeugs und dem Boden entspricht.

7. Fahrzeug nach einem der vorstehenden Ansprüche, wobei das Stützmittel (3) mindestens einen Abschnitt (3a) umfasst, der sich entlang einer Querrichtung in Bezug auf die liegende Ebene des Trittflächenabschnitts (2) erstreckt, um den Trittflächenabschnitt (2) in der zweiten Konfiguration in einer vordefinierten Höhe über dem Boden zu stützen.

8. Fahrzeug nach einem der vorstehenden Ansprüche, wobei mindestens eines der Stützmittel (3) aus einer Halterung hergestellt ist.

9. Fahrzeug nach Anspruch 8, wobei jede der Halterungen einen ersten Abschnitt (3a) bildet, der sich entlang einer Richtung quer zu der liegenden Ebene des Trittflächenabschnitts (2) erstreckt und an einem Ende mit dem Trittflächenabschnitt (2) verbunden ist, sowie einen zweiten Abschnitt (3b), der sich in einer Ebene parallel zu der Ebene des Trittflächenabschnitts (2) entwickelt, wobei der zweite Abschnitt (3b) einstückig mit dem ersten Abschnitt (3a) ist.

10. Fahrzeug nach einem der vorstehenden Ansprüche, wobei mindestens eines der Stützmittel (3) eine Reihe von Hebeln (4) umfasst.

11. Fahrzeug nach einem der vorstehenden Ansprüche, wobei es ein dem Stützmittel (3) zugeordnetes Rückstellmittel umfasst, wobei das Rückstellmittel angepasst ist, eine Kraft auf das Stützmittel (3) auszuüben, um die Umschaltung der Stützvorrichtung (1) von der zweiten Konfiguration in die erste Konfiguration zu bewirken.

12. Fahrzeug nach einem der vorstehenden Ansprüche, wobei das Stützmittel (3) lösbar dem Trittflächenabschnitt (2) zugeordnet ist.

## Revendications

1. Véhicule, en particulier un véhicule utilitaire pour transporter des produits, comprenant une cabine de conduite et un compartiment de chargement (11), approprié pour contenir lesdits produits, ledit véhicule comprenant un dispositif de support (1) comprenant au moins une partie de plan de marche (2) et des moyens de support (3) associés à ladite partie de plan de marche (2), ledit dispositif de support (1) étant mobile, lors de l'actionnement desdits moyens de support (3), entre une première configuration inactive, dans laquelle ladite partie de plan de marche (2) se trouve sur un plan longitudinal, de préférence sensiblement vertical, à l'intérieur dudit compartiment de chargement (11), et une seconde configuration opérationnelle dans laquelle ladite partie de plan de marche (2) se trouve sur un plan sensiblement horizontal, à l'extérieur dudit compartiment de chargement (11), ledit véhicule comprenant, sur une paroi (13) dudit compartiment de chargement (11), au moins une ouverture (14) pour entrer dans ledit compartiment de chargement (11), et une porte (15) adaptée pour être actionnée pour fermer ladite ouverture (14) ou pour rendre ledit compartiment de chargement (11) accessible, ledit dispositif de support (1) étant agencé, dans ladite première configuration, à l'intérieur dudit compartiment de chargement (11), à proximité de ladite ouverture (14), **caractérisé en ce qu'**il comprend un élément de verrouillage (7) qui est associé auxdits moyens de support (3) ou audit plancher (12), ledit élément de verrouillage (7) pouvant être actionné pour bloquer ledit dispositif de support (1) dans ladite seconde configuration et **en ce que** ladite porte (15) comprend un élément de déverrouillage (18) adapté pour exercer une force sur ledit élément de verrouillage (7), lorsque ladite porte (15) est déplacée pour fermer ladite ouverture (14), en désolidarisant ledit élément de verrouillage (7) dudit plancher (12) ou desdits moyens de support (3), pour permettre l'actionnement dudit dispositif de support (1) de ladite seconde configuration à ladite première configuration.

2. Véhicule selon la revendication 1, dans lequel ledit dispositif de support (1) est agencé, dans ladite première configuration, dans une région dudit compartiment de chargement (11) au-dessus d'un plancher (12) dudit compartiment de chargement (11).

3. Véhicule selon la revendication 2, dans lequel lesdits moyens de support (3) sont associés audit plancher (12) dudit compartiment de chargement (11).

4. Véhicule selon la revendication 1 ou 2, dans lequel il comprend une paroi de séparation agencée entre ladite cabine et ledit compartiment de chargement (11), lesdits moyens de support (3) étant associés à ladite paroi de séparation.

5. Véhicule selon l'une quelconque des revendications précédentes, dans lequel lesdits moyens de support (3) tournent autour d'un axe de rotation.

6. Véhicule selon l'une quelconque des revendications précédentes, dans lequel ladite partie de plan de marche (2) est agencée dans ladite seconde configuration à une hauteur d'environ la moitié de la hauteur entre un plancher (12) dudit véhicule et le sol.

7. Véhicule selon l'une quelconque des revendications précédentes, dans lequel lesdits moyens de support (3) comprennent au moins une partie (3a) qui s'étend le long d'une direction transversale par rapport au plan de couchage de ladite partie de plan de marche (2) de manière à supporter ladite partie de plan de marche (2), dans ladite seconde configuration, à une hauteur prédéfinie par rapport au sol.

8. Véhicule selon l'une quelconque des revendications précédentes, dans lequel au moins l'un desdits moyens de support (3) est constitué d'une équerre.

9. Véhicule selon la revendication 8, dans lequel chacune desdites équerres forme une première partie (3a) qui s'étend le long d'une direction transversale au plan de couchage de ladite partie de plan de marche (2) et est reliée, à une extrémité, à ladite partie de plan de marche (2), et une seconde partie (3b), qui se développe sur un plan parallèle au plan de ladite partie de plan de marche (2), ladite seconde partie (3b) étant solidaire de ladite première partie (3a).

10. Véhicule selon l'une quelconque des revendications précédentes, dans lequel au moins l'un desdits moyens de support (3) comprend une série de leviers (4).

11. Véhicule selon l'une quelconque des revendications précédentes, dans lequel il comprend des moyens de rappel associés auxdits moyens de support (3), lesdits moyens de rappel étant adaptés pour exercer une force sur lesdits moyens de support (3) de manière à provoquer le passage dudit dispositif de support (1) de ladite seconde configuration à ladite première configuration.

12. Véhicule selon l'une quelconque des revendications précédentes, dans lequel lesdits moyens de support (3) sont associés de manière amovible à ladite partie de plan de marche (2).
